## Europäisches Patentamt
## European Patent Office
## Office européen des brevets

(11) Veröffentlichungsnummer: **0 313 732**
A1

# EUROPÄISCHE PATENTANMELDUNG

(21) Anmeldenummer: 88111587.7

(22) Anmeldetag: 19.07.88

(51) Int. Cl.⁴: **B29C 65/02**

(30) Priorität: 23.09.87 CH 3681/87

(43) Veröffentlichungstag der Anmeldung:
03.05.89 Patentblatt 89/18

(84) Benannte Vertragsstaaten:
AT BE CH DE ES FR GB IT LI NL SE

(71) Anmelder: GEORG FISCHER AKTIENGESELLSCHAFT
Mühlentalstrasse 105
CH-8201 Schaffhausen(CH)

(72) Erfinder: Kunz, Peter
Breitenaustrasse 156
CH-8200 Schaffausen(CH)

(54) Verfahren zum Verschweissen von rohrförmigen Teilen aus thermoplastischem Material.

(57) In das Innere der zu verschweissenden rohrförmigen Teile 1a, 1b wird ein gasförmiges Medium, vorzugsweise Druckluft oder Stickstoff von einem Ende eingeleitet und am anderen Ende durch eine gedrosselte Auslassöffnung 7 abgeleitet.

Hierbei baut sich ein Ueberdruck auf, wobei gleichzeitig die Innenwand 10 gekühlt wird.

Beim Erhitzen mittels der Heizvorrichtung 2 werden dadurch in der Aufschmelzzone 11 die Enden nicht ganz bis zur Innenwand 10 aufgeschmolzen, so dass die Bildung eines inneren Schweisswulstes vermieden wird und der Innendruck einen Schweissdruck erzeugt.

EP 0 313 732 A1

## Verfahren zum Verschweissen von rohrförmigen Teilen aus thermoplastischem Material

Die Erfindung betrifft ein Verfahren zum Verschweissen von rohrförmigen Teilen aus thermoplastischem Material, wie es im Oberbegriff von Anspruch 1 gekennzeichnet ist.

Beim direkten Verschweissen von thermoplastischen Rohren bzw. rohrförmigen Teilen durch Erhitzung der zusammenstossenden Rohrenden an deren Aussenumfang mittels einer Heizvorrichtung, entsteht am Innenumfang dieser Teile ein Schweisswulst, welche den Durchflussquerschnitt verringert und den Strömungswiderstand erhöht. Dieser Wulst bildet dabei zusätzlich eine Gefahr für unerwünschte Ablagerungen wie Schmutz, Bakterien usw. Durch die Möglichkeit des Abfliessens der Schmelze in den Innenraum kann sich auch kein genügender Schweissdruck aufbauen, so dass die Schweissverbindungen nicht immer den Erfordernissen auf Festigkeit und Dichtheit entsprechen.

Es ist zwar bekannt, eine mechanische Abstützeinrichtung am Innenumfang im Bereich der Schweissverbindung anzuordnen (DE-GBM-68213275.2), welche aber nur für gerade, sich nur unwesentlich verengende Rohrteile verwendbar ist, da diese nur aus derartigen Rohrteilen nach dem Schweissen wieder entfernbar ist.

Aufgabe der vorliegenden Erfindung ist die Schaffung eines Verfahrens der eingangs genannten Art, mittels welchem den Rohrquerschnitt verengende Schweisswülste verhindert werden und sich bei der Schweissung ein ausreichender Schweissdruck zur Erreichung einwandfreier Schweissverbindungen aufbaut. Das Verfahren soll auch bei mit Ecken und Verengungen versehenen Rohrteilen bzw. Rohrleitungen anwendbar sein.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Das erfindungsgemässe Verfahren gewährleistet ohne die Verwendung von inneren Abstützvorrichtungen eine im Innenumfang wulstfreie und glatte Schweissverbindung, wobei auch durch den Ueberdruck des gasförmigen Mediums im Inneren der rohrförmigen Teile das Einfallen der Rohrenden verhindert und ein Schweissdruck für eine einwandfreie Schweissverbindung erzeugt wird.

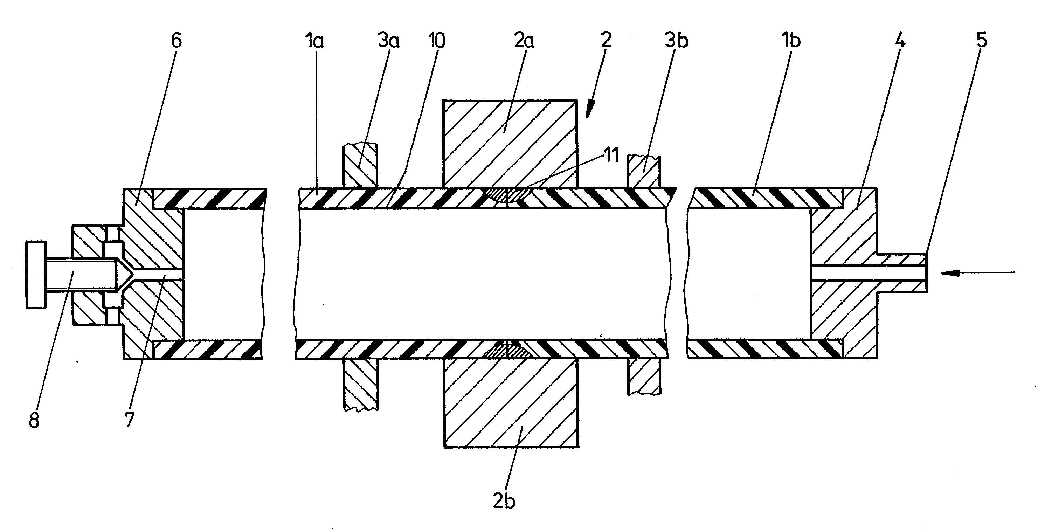

Die Erfindung ist in der Zeichnung beispielsweise dargestellt und nachfolgend beschrieben.

Die einzige Figur zeigt das Verschweissen zweier rohrförmiger Teile mittels einer vereinfacht dargestellten Schweissvorrichtung.

Diese Schweissvorrichtung weist eine am Aussenumfang der beiden Enden der zu verschweissenden rohrförmigen thermoplastischen Teile 1a, 1b angeordnete Heizvorrichtung 2 auf, welche im wesentlichen aus zwei aufklappbaren Heizbacken 2a, 2b besteht. Das Aufschmelzen der Enden erfolgt durch Kontaktwärme.

Die Aufheizung der Heizbacken 2a, 2b kann durch elektrischen Strom, durch Heissluft oder durch eine erhitzte Flüssigkeit wie z.B. Oel erfolgen.

Spannvorrichtungen 3a, 3b gewährleisten eine koaxiale Halterung der beiden rohrförmigen Teile 1a, 1b.

An den nicht zu verschweissenden Enden eines der rohrförmigen Teile 1b ist ein Anschlussstück 4 mit einer Zufuhrleitung 5 für ein gasförmiges Medium, vorzugsweise Druckluft oder Stickstoff angeordnet. An dem nicht zu verschweissenden Ende des anderen rohrförmigen Teiles 1a ist ein Anschlussstück 6 mit einer Auslassöffnung 7 angeordnet. Der Auslassquerschnitt der Oeffnung 7 kann mittels einer Drosselschraube 8 verändert werden, so dass die pro Zeiteinheit durchströmende Menge Druckluft einstellbar ist. Dadurch kann auch der im Inneren der rohrförmigen Teile 1a, 1b sich aufbauende Ueberdruck eingestellt werden. Vorzugsweise sollte der Druck in einem Bereiche zwischen 0,1 und 6 bar einstellbar sein.

Gleichzeitig wird die Innenwand 10 der rohrförmigen Teile durch das durchströmende Medium wie z.B. Druckluft so weit gekühlt, dass die Aufschmelzzone 11 an den beiden Enden der rohrförmigen Teile 1a, 1b nicht ganz bis zur Innenwand reicht. Durch den Innendruck wird ein Einfallen der Rohrenden beim Schweissen verhindert und gleichzeitig ein gegen die Heizbacken 2a, 2b gerichteter Schweissdruck erzeugt.

Die Drosselschraube 8 kann auch mit einem steuerbaren Absperrventil kombiniert sein, so dass zuerst ein statischer Druckaufbau - vorzugsweise vor dem Aufschmelzprozess - zur Erzeugung des Schweissdruckes und anschliessend eine Strömung des Druckmediums zur zusätzlichen Kühlung einstellbar ist.

Das Aufschmelzen der Enden der rohrförmigen Teile 1a, 1b kann auch mittels Strahlungswärme erfolgen.

Bei einer Verfahrensvariante können hierbei die Enden der rohrförmigen Teile 1a, 1b in distanzierter Lage zueinander mittels einer Strahlungswärmequelle erhitzt und anschliessend die rohrförmigen Teile zusammengefügt werden. Nach dem Zusammenfügen wird dann im Innenraum der rohrförmigen Teile 1a, 1b der Ueberdruck mittels des gasförmigen Mediums aufgebaut, wodurch ein nach aussen gerichteter Schweissdruck erzeugt wird.

**Ansprüche**

1. Verfahren zum Verschweissen von rohrförmigen Teilen aus einem Thermoplast, wobei die Enden der rohrförmigen Teile mittels Wärme aufgeschmolzen werden, dadurch gekennzeichnet, dass durch Zufuhr eines gasförmigen Mediums im Innraum mindestens im Bereich der zu verschweissenden Rohrenden ein Ueberdruck aufgebaut wird.

2. Verfahren nach Anspruch 1, dadurch gekennzeichnet, dass das zugeführte Medium die rohrförmigen Teile durchströmt und die Innenwand im Schweissbereich derart kühlt, dass deren Temperatur beim Aufheizen unterhalb der Schmelztemperatur bleibt.

3. Verfahren nach Anspruch 1 oder 2, dadurch gekennzeichnet, dass das gasförmige Medium an einem Ende der rohrförmigen Teile zugeführt und am anderen Ende über eine einstellbare Drossel abgeführt wird.

4. Verfahren nach einem der Ansprüche 1 bis 3, dadurch gekennzeichnet, dass das gasförmige Medium Luft ist.

5. Verfahren nach einem der Ansprüche 1 bis 3, dadurch gekennzeichnet, dass das gasförmige Medium Stickstoff ist.

6. Verfahren nach einem der Ansprüche 1 bis 4, dadurch gekennzeichnet, dass der Druck des gasförmigen Mediums im Innenraum der rohrförmigen Teile in einem Bereich zwischen 0,1 und 6 bar einstellbar ist.

7. Verfahren nach einem der Ansprüche 1 bis 6, dadurch gekennzeichnet, dass die Enden der rohrförmigen Teile in distanzierter Lage mittels Strahlungswärme aufgeschmolzen werden und nach deren Zusammenfügen im Innenraum der Ueberdruck durch das gasförmige Medium aufgebaut wird.

8. Verfahren nach einem der Ansprüche 1 bis 6, dadurch gekennzeichnet, dass die zusammenstossenden Enden der rohrförmigen Teile mittels Strahlungs- oder Kontaktwärme aufgeschmolzen werden, wobei der Aufbau des Ueberdruckes im Innenraum vor oder nach dem Aufschmelzen der Rohrenden erfolgt.

K.Nr. 2580/F/P

| | **EINSCHLÄGIGE DOKUMENTE** | | EP 88111587.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| X | DE - A1 - 2 633 141 (ECKARDT)  * Anspruch 1; Fig. * | 1 | B 29 C 65/02 |
| A | | 3-8 | |
| | -- | | |
| A | CH - A - 493 323 (DEUTSCHE RHODIACETA)  * Ansprüche; Fig. 4 * | 1 | |
| | -- | | |
| A | US - A - 3 536 567 (HARRISON)  * Gesamt * | | |
| | ---- | | |

|  |
|---|
| RECHERCHIERTE SACHGEBIETE (Int. Cl.4) |
| B 29 C |

Der vorliegende Recherchenbericht wurde für alle Patentansprüche erstellt.

| Recherchenort | Abschlußdatum der Recherche | Prüfer |
|---|---|---|
| WIEN | 10-02-1989 | REININGER |